# EUROPEAN PATENT APPLICATION

(11) **EP 4 220 388 A1**
(43) Date of publication of application: **02.08.2023**
(21) Application number: 21871533.2
(22) Date of filing: 23.09.2021
(51) Int. Cl.: G06F 9/451

(54) **INTERFACE DISPLAY METHOD AND APPARATUS, AND ELECTRONIC DEVICE**

(30) Priority: 24.09.2020 CN 202011014538
(71) Applicant: Vivo Mobile Communication Co., Ltd., Dongguan, Guangdong 523863 (CN)
(72) Inventor: DAI, Qishuai, Dongguan, Guangdong 523863 (CN)
(74) Representative: Murgitroyd & Company
(86) International application number: PCT/CN2021/119851
(87) International publication number: WO 2022/063164

(57) **Abstract**

An interface display method and apparatus, and an electronic device are disclosed. The interface display method includes: displaying, by an interface display apparatus, a target window, where the target window includes N payment identifiers, each payment identifier indicates one payment interface in one target application, and N is a positive integer; receiving, by the interface display apparatus, a secure input of a user; and in a case that security information corresponding to the secure input matches preset security information, displaying, by the interface display apparatus in response to the secure input, a payment interface indicated by a target payment identifier in the N payment identifiers.

## Description

This application claims priority to Chinese Patent Application No. 202011014538.X, filed with the China National Intellectual Property Administration on September 24, 2020 and entitled "INTERFACE DISPLAY METHOD AND APPARATUS, AND ELECTRONIC DEVICE", which is incorporated herein by reference in its entirety.

### TECHNICAL FIELD

This application pertains to the field of communications technologies, and specifically relates to an interface display method and apparatus, and an electronic device.

### BACKGROUND

Generally, in a scenario in which a user performs a payment operation by using a payment application in an electronic device, if the user wants to perform the payment operation by using an application 1, the user may search a desktop of the electronic device for an application icon 1 of the application 1 one by one, and click the application icon 1, so that the electronic device can start the application 1. In this way, the user may perform a plurality of operations on an interface of the application 1, so that the electronic device can display a payment interface, and the user can perform the payment operation on the payment interface.

However, the user needs to search the desktop for the application icon 1 of the application 1 one by one, and perform a plurality of operations on the interface of the application 1, so that the electronic device can display the payment interface of the application 1. Therefore, in a process of displaying the payment interface, operations of the user are relatively cumbersome and time-consuming.

Consequently, an operation of displaying a payment interface by the electronic device is relatively cumbersome, and efficiency of performing a payment operation by the user by using the electronic device is relatively low.

### SUMMARY

Embodiments of this application aim to provide an interface display method and apparatus, and an electronic device, to resolve a problem that an operation in which a user triggers an electronic device to display a payment interface is cumbersome, and efficiency of performing a payment operation by using the electronic device is relatively low.

To resolve the foregoing technical problem, this application is implemented as follows:
According to a first aspect, an embodiment of this application provides an interface display method. The method includes: displaying a target window, where the target window includes N payment identifiers, each payment identifier indicates one payment interface in one target application, and N is a positive integer; receiving a secure input of a user; and in a case that security information corresponding to the secure input matches preset security information, displaying, in response to the secure input, a payment interface indicated by a target payment identifier in the N payment identifiers.

According to a second aspect, an embodiment of this application provides an interface display apparatus. The interface display apparatus includes a display module and a receiving module. The display module is configured to display a target window, where the target window includes N payment identifiers, each payment identifier indicates one payment interface in one target application, and N is a positive integer. The receiving module is configured to receive a secure input of a user. The display module is further configured to: in a case that security information corresponding to the secure input matches preset security information, display, in response to the secure input received by the receiving module, a payment interface indicated by a target payment identifier in the N payment identifiers.

According to a third aspect, an embodiment of this application provides an electronic device. The electronic device includes a processor, a memory, and a program or an instruction that is stored in the memory and executable on the processor, where when the program or the instruction is executed by the processor, the steps of the method in the first aspect are implemented.

According to a fourth aspect, an embodiment of this application provides a readable storage medium. The readable storage medium stores a program or an instruction, and when the program or the instruction is executed by a processor, the steps of the method in the first aspect are implemented.

According to a fifth aspect, an embodiment of this application provides a chip. The chip includes a processor and a communications interface, the communications interface is coupled to the processor, and the processor is configured to run a program or an instruction to implement the method in the first aspect.

In the embodiments of this application, an electronic device may display a target window that includes N payment identifiers (each payment identifier indicates one payment interface in one target application), and display, according to a secure input of a user in a case that security information corresponding to the secure input matches preset security information, a payment interface indicated by a target identifier in the N payment identifiers. In a case that the electronic device displays the target window, the user may perform the secure input of entering the security information on the electronic device, so that the electronic device can directly display, in a case that the security information matches the preset security information, the payment interface indicated by the target identifier, that is, the user may perform an input on the electronic device once, so that the electronic device can display the payment interface indicated by the target identifier, and the user does not need to perform a plurality of operations. Therefore, operations of the user can be simplified, and time consumption can be reduced, thereby improving efficiency of performing a payment operation by using the electronic device.

### BRIEF DESCRIPTION OF DRAWINGS

FIG. 1 is a first schematic diagram of an interface display method according to an embodiment of this application;
FIG. 2 is a first schematic diagram of an example of an interface of a mobile phone according to an embodiment of this application;
FIG. 3 is a second schematic diagram of an example of an interface of a mobile phone according to an embodiment of this application;
FIG. 4 is a second schematic diagram of an interface display method according to an embodiment of this application;
FIG. 5 is a third schematic diagram of an interface display method according to an embodiment of this application;
FIG. 6 is a third schematic diagram of an example of an interface of a mobile phone according to an embodiment of this application;
FIG. 7 is a schematic structural diagram of an interface display apparatus according to an embodiment of this application;
FIG. 8 is a schematic structural diagram of an electronic device according to an embodiment of this application; and
FIG. 9 is a schematic diagram of hardware of an electronic device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and claims of this application, the terms "first", "second", and the like are intended to distinguish between similar objects but do not describe a specific order or sequence. It should be understood that, data used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in the specification and the claims, "and/or" represents at least one of connected objects, and a character "/" generally represents an "or" relationship between associated objects.

With reference to the accompanying drawings, an interface display method provided in the embodiments of this application is described in detail by using specific embodiments and application scenarios.

The embodiments of this application may be applied to a scenario in which a user performs a payment operation by using a payment application in an electronic device.

It is assumed that the user wants to perform the payment operation by using an application 1 in the electronic device, and the user may first click the HOME button of the electronic device, so that the electronic device can display a desktop. Then, the user may search for an application icon of the application 1 in all application icons in the desktop, and click the application icon of the application 1, so that the electronic device can display an interface of the application 1. In this way, the user may search the interface of the application 1 for an interface option of a payment interface 1 of the application 1, so that the electronic device can switch the interface of the application 1 to the payment interface 1, and the user can perform the payment operation by using the payment interface 1. However, the user needs to search the desktop for the application icon of the application 1 one by one, and perform a plurality of operations on the interface of the application 1, so that the electronic device can display the payment interface 1. Therefore, operations of the user are relatively cumbersome and time-consuming. In the embodiments of this application, the user may perform a slide input on a display screen of the electronic device, so that the electronic device can display a payment card (the payment card includes icons of all payment interfaces of all applications that have a payment function in the electronic device). In this way, the user may perform a fingerprint input in the electronic device, so that when fingerprint information corresponding to the fingerprint input matches preset fingerprint information, the electronic device can directly display a payment interface indicated by an icon of a target payment interface in the icons of all payment interfaces, so that operations of the user can be simplified and time consumption can be reduced.

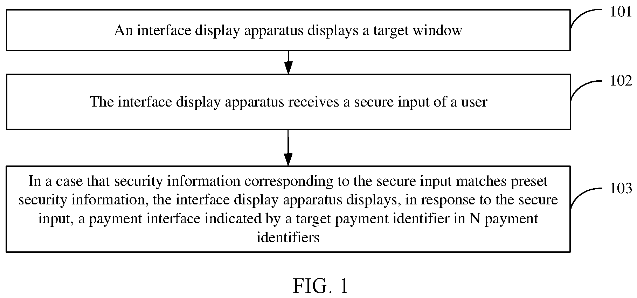

According to the interface display method provided in the embodiments of this application, FIG. 1 is a flowchart of an interface display method according to an embodiment of this application. As shown in FIG. 1, the interface display method provided in this embodiment of this application may include the following steps 101 to step 103.

Step 101: An interface display apparatus displays a target window.

Optionally, in this embodiment of this application, in a case that the interface display apparatus is in an off-screen state, the interface display apparatus may control, according to an input of a user, the interface display apparatus to be in an on-screen state, display unlock prompt information according to the input of the user (for example, a slide input), and display the target window according to an unlock input of the user on unlock information in a case that the unlock information matches preset unlock information.

Optionally, in this embodiment of this application, in a case that the interface display apparatus is in an unlock state, the interface display apparatus may display the target window according to the input of the user (for example, a slide input).

In this embodiment of this application, the target window includes N payment identifiers, each payment identifier indicates one payment interface in one target application, and N is a positive integer.

Optionally, in this embodiment of this application, for each payment identifier in the N payment identifiers, one payment identifier may be specifically an interface icon of one payment interface in one target application.

Optionally, in this embodiment of this application, each target application is an application that has a payment function in an electronic device.

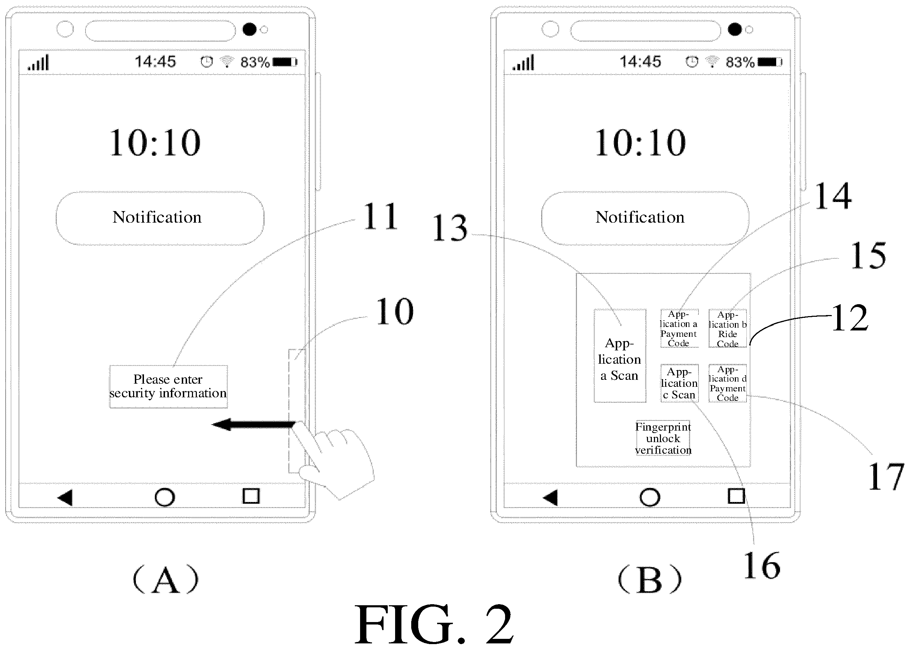

For example, the interface display apparatus is a mobile phone. As shown in (A) in FIG. 2, the mobile phone is in a screen-on state. In this case, the user may perform a slide input (for example, a left slide input) in a side region (for example, a region 10) of a display screen of the mobile phone, so that the mobile phone can display unlock prompt information (for example, prompt information 11), and the user can perform a fingerprint input on the mobile phone. As shown in (B) in FIG. 2, after the user performs a password input, if password information corresponding to the password input matches preset password information in the mobile phone, the mobile phone may display the target window (for example, a window 12), where the window 12 includes N payment identifiers (for example, a payment identifier 13, a payment identifier 14, a payment identifier 15, a payment identifier 16, and a payment identifier 17). The payment identifier 13 indicates one payment interface (for example, a payment interface "Scan") in one target application (for example, an application a), the payment identifier 14 indicates another payment interface (for example, a payment interface "Payment Code") in the target application (for example, the application a), the payment identifier 15 indicates one payment interface (for example, a payment interface "Ride Code") in one target application (for example, an application b), the payment identifier 16 indicates one payment interface (for example, a payment interface "Scan") in one target application (for example, an application c), and the payment identifier 17 indicates a payment interface (for example, a payment interface "Payment Code") in one target application (for example, an application d), so that the user can perform a secure input.

Step 102: The interface display apparatus receives a secure input of a user.

In this embodiment of this application, the secure input is used to trigger the interface display apparatus to display a payment interface.

Optionally, in this embodiment of this application, the secure input may be specifically: an input of entering password information by the user in the interface display apparatus, or an input of entering fingerprint information by the user in the interface display apparatus.

Step 103: In a case that security information corresponding to the secure input matches preset security information, the interface display apparatus displays, in response to the secure input, a payment interface indicated by a target payment identifier in N payment identifiers.

It can be understood that if the security information corresponding to the secure input matches the preset security information, it may be considered that the interface display apparatus is currently in a secure environment. Therefore, the interface display apparatus may display the payment interface indicated by the target payment identifier.

Optionally, in this embodiment of this application, the target payment identifier is determined based on historical usage data of the N payment identifiers, or is determined based on information about an environment in which the interface display apparatus is currently located, or is determined according to an input of the user, or is preset by the user in the interface display apparatus.

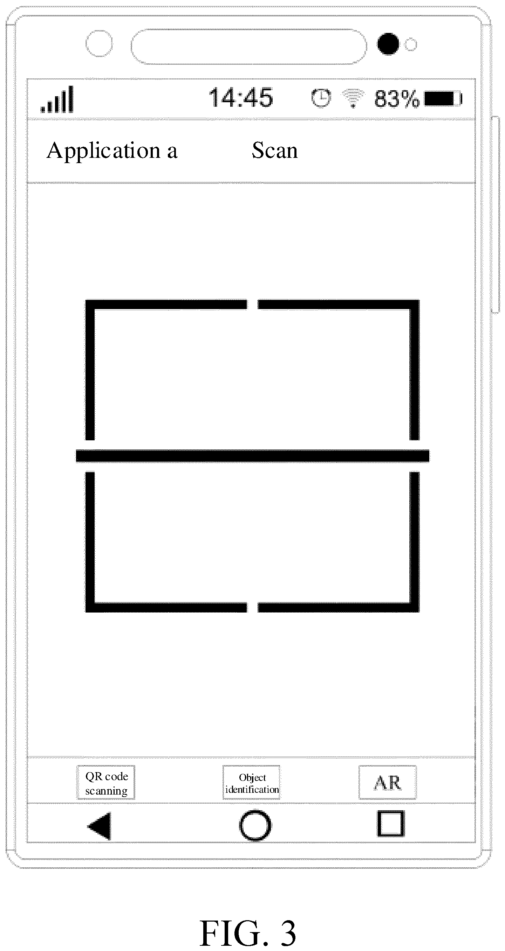

For example, with reference to (B) in FIG. 2, as shown in FIG. 3, the mobile phone may display, according to the secure input of the user (for example, the fingerprint input) in a case that fingerprint information corresponding to the fingerprint input matches preset fingerprint information, the payment interface indicated by the target payment identifier (for example, the payment identifier 13), that is, the payment interface "Scan" in the application a.

According to the interface display method provided in this embodiment of this application, an interface display apparatus may display a target window that includes N payment identifiers (each payment identifier indicates one payment interface in one target application), and display, according to a secure input of a user in a case that security information corresponding to the secure input matches preset security information, a payment interface indicated by a target identifier in the N payment identifiers. In a case that the interface display apparatus displays the target window, the user may perform the secure input of entering the security information on the interface display apparatus, so that the interface display apparatus can directly display, in a case that the security information matches the preset security information, the payment interface indicated by the target identifier, that is, the user may perform an input on the interface display apparatus once, so that the interface display apparatus can display the payment interface indicated by the target identifier, and the user does not need to perform a plurality of operations. Therefore, operations of the user can be simplified, and time consumption can be reduced, thereby improving efficiency of performing a payment operation by the user by using the interface display apparatus.

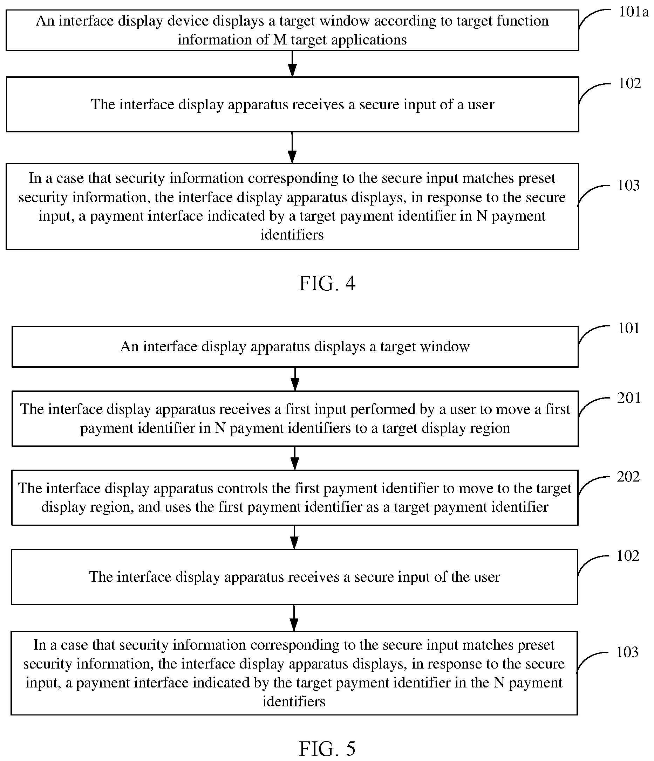

Optionally, in this embodiment of this application, the target window is displayed according to function information of M target applications. Specifically, with reference to FIG. 1, as shown in FIG. 4, the foregoing step 101 may be specifically implemented by using the following step 101a.

Step 101a: The interface display apparatus displays the target window according to target function information of M target applications.

Further, optionally, in this embodiment of this application, the user may perform a click input on a "Shortcut Payment" option in a "Setting" application in the interface display apparatus, so that the interface display apparatus can enable a shortcut payment function, and the interface display apparatus can display the target window according to the target function information of the M target applications.

In this embodiment of this application, the target function information is used to indicate that a corresponding application has a payment function, the M target applications include payment interfaces indicated by the N payment identifiers, and M is a positive integer.

Further, optionally, in this embodiment of this application, one piece of target function information may be specifically an interface name of a payment interface of one target application.

Further, optionally, in this embodiment of this application, the interface display apparatus may first determine, from the interface display apparatus, the M target applications whose application names match preset application names, then generate the N payment identifiers according to the target function information of the M target applications, and display the N payment identifiers to display the target window.

For example, for target function information of each target application in the target function information of the M target applications, the interface display apparatus may generate one payment identifier according to target function information of one target application by using a DeepLink (DeepLink) technology, so as to generate the N payment identifiers.

It can be understood that each payment identifier is a jump link schema of one payment interface.

Further, optionally, in this embodiment of this application, after the interface display apparatus generates the N payment identifiers, the interface display apparatus may display the target window in a hover box on an interface currently displayed by the interface display apparatus.

It can be understood that in a case that the user uses another application in the interface display apparatus, if the user needs to perform a payment operation, the user may trigger the interface display apparatus to display the target window in a hover box on the currently displayed interface, so as to complete the payment operation, that is, the user may complete the payment operation in a minimum interrupt behavior.

In this embodiment of this application, the interface display apparatus may display the target window according to the target function information of the M target applications (the target window includes the N payment identifiers that indicate the payment interfaces included in the M target applications), that is, the interface display apparatus may display the N payment identifiers of the payment interfaces of the M target applications in one window, so that in a case that the interface display apparatus displays the target window, the user may trigger the interface display apparatus to display the payment interface indicated by the target payment identifiers in the N payment identifiers, and the user does not need to perform a plurality of operations. Therefore, operations of the user can be simplified, and time consumption can be reduced, thereby improving efficiency of displaying a payment interface by the interface display apparatus.

It can be understood that the interface display apparatus may aggregate identifiers of all payment interfaces related to a payment scenario in a same window for display, so that the user can directly perform an input on a specific touch entry in touch entries of all the payment interfaces, and the interface display apparatus can directly display a payment interface corresponding to the touch entry, thereby shortening an operation path.

Optionally, in this embodiment of this application, the target window includes N display regions, and a payment identifier corresponding to one target application is displayed in each display region.

Further, optionally, in this embodiment of this application, the interface display apparatus may display, in the N display regions in a first sorting sequence, one payment identifier corresponding to one target application, so as to display the N payment identifiers.

Further, optionally, in this embodiment of this application, the first sorting sequence is determined based on historical usage data of the user for the M target applications, or is determined based on information about an environment in which the interface display apparatus is currently located.

For example, the interface display apparatus may sort the N payment identifiers in descending order of usage frequency of the N payment interfaces according to the usage frequency of the N payment interfaces indicated by the N payment identifiers by the user, to obtain the first sorting sequence.

Further, optionally, in this embodiment of this application, after the interface display apparatus displays the N payment identifiers, the user may perform an input on a payment identifier (for example, the first payment identifier in the following embodiment) in the N payment identifiers, so as to adjust a display location of the payment identifier.

In this embodiment of this application, the interface display apparatus may separately display, in the N display regions included in the target window, the payment identifiers corresponding to the N target applications, so that the user can directly perform, according to a usage requirement, an input on a payment identifier in the payment identifiers corresponding to the N target applications, thereby simplifying operations of the user.

Optionally, in this embodiment of this application, the target payment identifier is a payment identifier in a target display region in the N display regions.

It can be understood that the payment identifier in the target display region may be a payment identifier required by the user. Therefore, the interface display apparatus may determine the payment identifier in the target display region as the target payment identifier.

In this embodiment of this application, the interface display apparatus may determine the payment identifier in the target display region as the target payment identifier. Therefore, in a case that the target window is displayed, the user may directly perform the secure input on the interface display apparatus, so that the interface display apparatus can directly display the payment interface indicated by the payment identifier in the target display region, without requiring the user to perform a selection input on the target payment identifier, thereby simplifying operations of the user.

The following uses an example in which a payment identifier is the first payment identifier to describe in detail how the user can adjust a display location of the payment identifier after the interface display apparatus displays the N payment identifiers.

Optionally, in this embodiment of this application, with reference to FIG. 1, as shown in FIG. 5, before the foregoing step 102, the interface display method provided in this embodiment of this application may further include the following step 201 and step 202.

Step 201: The interface display apparatus receives a first input performed by the user to move a first payment identifier in the N payment identifiers to the target display region.

Further, optionally, in this embodiment of this application, the target window further includes a first control, and the user may perform a click input on the first control, so that the interface display apparatus can control the N payment identifiers to be in an editable state, and the user can perform the first input.

It should be noted that the foregoing "payment identifiers to be in an editable state" may be understood as a state in which the user may trigger the interface display apparatus to perform an operation on the payment identifier such as moving, deleting, or combining for display.

Further, optionally, in this embodiment of this application, the first input may be specifically a slide input of the user on the display screen from a display location of the first payment identifier to the target display region.

Further, optionally, in this embodiment of this application, the first payment identifier may be any payment identifier of the N payment identifiers.

Step 202: In response to the first input, the interface display apparatus controls the first payment identifier to move to the target display region, and uses the first payment identifier as the target payment identifier.

It can be understood that the user may perform an input on any payment identifier in the N payment identifiers according to a usage habit, so that the interface display apparatus can control the any payment identifier to move to the target display region, and use the any payment identifier as the target payment identifier.

In this embodiment of this application, the interface display apparatus may control, according to the first input of the user, the first payment identifier to move to the target display region, and use the first payment identifier as the target payment identifier. In this way, in a case that the target window is displayed, the user may directly perform the secure input on the interface display apparatus, so that the interface display apparatus can directly display the payment interface indicated by the payment identifier in the target display region, without requiring the user to perform a selection input on the target payment identifier, thereby simplifying operations of the user.

Optionally, in this embodiment of this application, after the user performs a click input on the first control, the user may perform a delete input on a second payment identifier in the N payment identifiers, so that the interface display apparatus can delete the second payment identifier from the target window, and display a first window, where the first window includes the second payment identifier.

Further, optionally, in this embodiment of this application, the second payment identifier may be any payment identifier of the N payment identifiers.

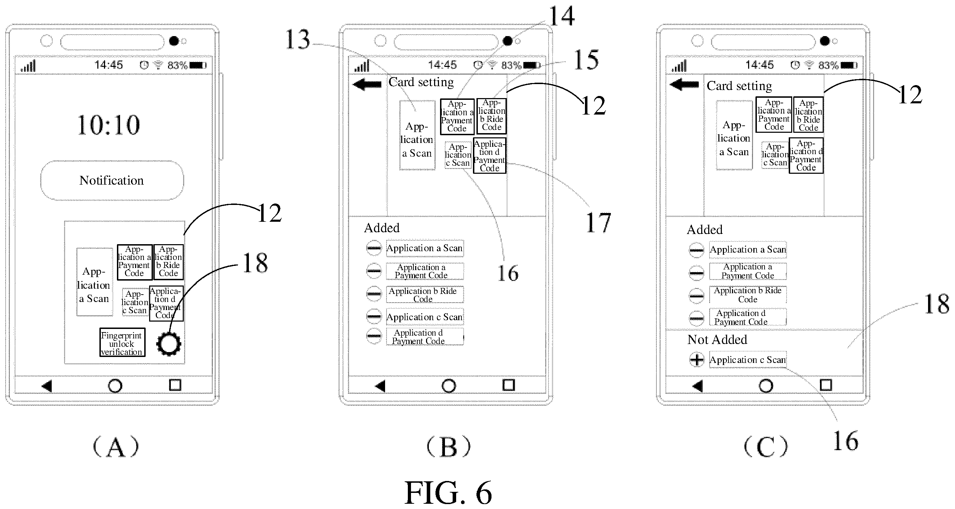

For example, with reference to (B) in FIG. 2, as shown in (A) in FIG. 6, a window 12 further includes a first control (for example, a control 18), so that the user can perform an input on the control 18. As shown in (B) in FIG. 6, after the user performs an input on the control 18, the mobile phone may control the payment identifier 13, the payment identifier 14, the payment identifier 15, the payment identifier 16, and the payment identifier 17 to be in an editable state, so that the user may perform a delete input on the second payment identifier (for example, the payment identifier 16). As shown in (C) in FIG. 6, after the user performs a delete input on the payment identifier 16, the mobile phone may delete the payment identifier 16 from the window 12, and display the first window (for example, a window 18), where the window 18 includes the payment identifier 16.

It should be noted that the interface display method provided in this embodiment of this application may be performed by an interface display apparatus, or a control module that is in the interface display apparatus and that is configured to perform the interface display method. In the embodiments of this application, that the interface display apparatus performs the interface display method is used as an example to describe the apparatus for the interface display method provided in the embodiments of this application.

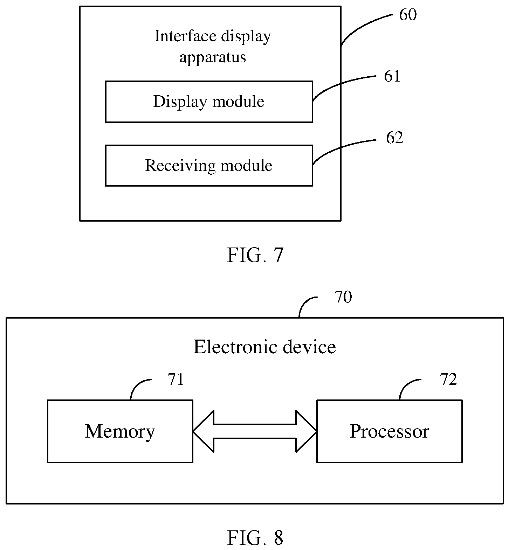

FIG. 7 is a possible schematic structural diagram of an interface display apparatus according to an embodiment of this application. As shown in FIG. 7, an interface display apparatus 60 may include a display module 61 and a receiving module 62.

The display module 61 is configured to display a target window, where the target window includes N payment identifiers, each payment identifier indicates one payment interface in one target application, and N is a positive integer. The receiving module 62 is configured to receive a secure input of a user. The display module 61 is further configured to: in a case that security information corresponding to the secure input matches preset security information, display, in response to the secure input received by the receiving module 62, a payment interface indicated by a target payment identifier in the N payment identifiers.

In a possible implementation, the display module 61 is specifically configured to display the target window according to target function information of M target applications. The target function information is used to indicate that a corresponding application has a payment function, the M target applications include payment interfaces indicated by the N payment identifiers, and M is a positive integer.

In a possible implementation, the target window includes N display regions, and a payment identifier corresponding to one target application is displayed in each display region.

In a possible implementation, the target payment identifier is a payment identifier in a target display region in the N display regions.

In a possible implementation, the receiving module 62 is further configured to receive a first input performed by the user to move a first payment identifier in the N payment identifiers to the target display region. The interface display apparatus 60 provided in this embodiment of this application may further include a moving module and a determining module. The moving module is configured to: in response to the first input received by the receiving module 62, control the first payment identifier to move to the target display region. The determining module is configured to use the first payment identifier moved by the mobile module as the target payment identifier.

According to the interface display apparatus provided in this embodiment of this application, in a case that the interface display apparatus displays a target window, a user may perform a secure input of entering security information on the interface display apparatus, so that the interface display apparatus can directly display, in a case that the security information matches preset security information, a payment interface indicated by a target identifier, that is, the user may perform an input on the interface display apparatus once, so that the interface display apparatus can display the payment interface indicated by the target identifier, and the user does not need to perform a plurality of operations. Therefore, operations of the user can be simplified, and time consumption can be reduced, thereby improving efficiency of performing a payment operation by using the interface display apparatus.

The interface display apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a laptop computer, a palmtop computer, an in-vehicle electronic device, a wearable device, an ultra-mobile personal computer (ultra-mobile personal computer, UMPC), a netbook, or a personal digital assistant (personal digital assistant, PDA). The non-mobile electronic device may be a server, a network attached storage (network attached storage, NAS), a personal computer (personal computer, PC), a television (television, TV), an automated teller machine, or a self-service machine. This is not specifically limited in the embodiments of this application.

The interface display apparatus in this embodiment of this application may be an apparatus with an operating system. The operating system may be an Android (Android) operating system, an iOS operating system, or another possible operating system. This is not specifically limited in this embodiment of this application.

The interface display apparatus provided in this embodiment of this application can implement the processes implemented in the method embodiments in FIG. 1 to FIG. 6. To avoid repetition, details are not described herein again.

Optionally, as shown in FIG. 8, an embodiment of this application further provides an electronic device 70, including a processor 72, a memory 71, and a program or an instruction that is stored in the memory 71 and executable on the processor 72. When the program or the instruction is executed by the processor 72, the processes of the foregoing interface display method embodiment are implemented and a same technical effect can be achieved. To avoid repetition, details are not described herein again.

It should be noted that the electronic device in this embodiment of this application includes the foregoing mobile electronic device and the foregoing non-mobile electronic device.

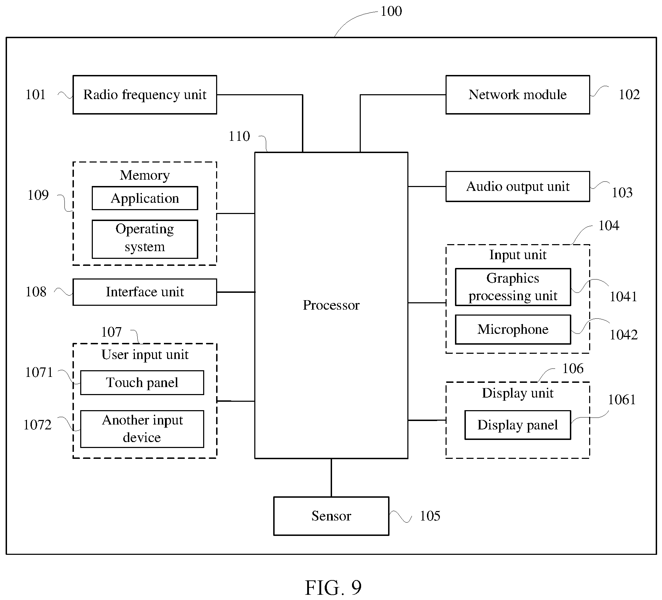

FIG. 9 is a schematic structural diagram of hardware of an electronic device according to an embodiment of this application.

An electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

A person skilled in the art can understand that the electronic device 100 may further include a power supply (such as a battery) that supplies power to each component. The power supply may be logically connected to the processor 110 by using a power supply management system, to implement functions such as charging and discharging management, and power consumption management by using the power supply management system. The structure of the electronic device shown in FIG. 9 does not constitute a limitation on the electronic device. The electronic device may include components more or fewer than those shown in the diagram, a combination of some components, or different component arrangements. Details are not described herein.

The display unit 106 is configured to display a target window, where the target window includes N payment identifiers, each payment identifier indicates one payment interface in one target application, and N is a positive integer.

The user input unit 107 is configured to receive a secure input of a user.

The display unit 106 is configured to: in a case that security information corresponding to the secure input matches preset security information, display, in response to the secure input, a payment interface indicated by a target payment identifier in the N payment identifiers.

According to the electronic device provided in this embodiment of this application, in a case that the electronic device displays a target window, a user may perform a secure input of entering security information on the electronic device, so that the electronic device can directly display, in a case that the security information matches preset security information, a payment interface indicated by a target identifier, that is, the user may perform an input on the electronic device once, so that the electronic device can display the payment interface indicated by the target identifier, and the user does not need to perform a plurality of operations. Therefore, operations of the user can be simplified, and time consumption can be reduced, thereby improving efficiency of performing a payment operation by using the electronic device.

Optionally, in this embodiment of this application, the display unit 106 is specifically configured to display the target window according to target function information of M target applications.

The target function information is used to indicate that a corresponding application has a payment function, the M target applications include payment interfaces indicated by the N payment identifiers, and M is a positive integer.

In this embodiment of this application, the electronic device may display the target window according to the target function information of the M target applications (the target window includes the N payment identifiers that indicate the payment interfaces included in the M target applications), that is, the electronic device may display the N payment identifiers of the payment interfaces of the M target applications in one window, so that in a case that the electronic device displays the target window, the user may trigger the electronic device to display the payment interface indicated by the target payment identifiers in the N payment identifiers, and the user does not need to perform a plurality of operations. Therefore, operations of the user can be simplified, and time consumption can be reduced, thereby improving efficiency of displaying a payment interface by the electronic device.

Optionally, in this embodiment of this application, the user input unit 107 is further configured to receive a first input performed by the user to move a first payment identifier in the N payment identifiers to the target display region.

The processor 110 is configured to: in response to the first input, control the first payment identifier to move to the target display region, and use the first payment identifier as the target payment identifier.

In this embodiment of this application, the electronic device may control, according to the first input of the user, the first payment identifier to move to the target display region, and use the first payment identifier as the target payment identifier. In this way, in a case that the target window is displayed, the user may directly perform the secure input on the electronic device, so that the electronic device can directly display the payment interface indicated by the payment identifier in the target display region, without requiring the user to perform a selection input on the target payment identifier, thereby simplifying operations of the user.

It should be understood that, in this embodiment of this application, the input unit 104 may include a graphics processing unit (graphics processing unit, GPU) 1041 and a microphone 1042, and the graphics processing unit 1041 processes image data of a still picture or a video obtained by an image capture apparatus (such as a camera) in a video capture mode or an image capture mode. The display unit 106 may include a display panel 1061. Optionally, the display panel 1061 may be configured in a form such as a liquid crystal display or an organic light-emitting diode. The user input unit 107 includes a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a functional button (such as a volume control button or a power on/off button), a trackball, a mouse, and a joystick. Details are not described herein. The memory 109 may be configured to store a software program and various data, including but not limited to an application and an operating system. An application processor and a modem processor may be integrated into the processor 110, the application processor mainly processes an operating system, a user interface, an application program, and the like, and the modem processor mainly processes wireless communication. It can be understood that, alternatively, the modem processor may not be integrated into the processor 110.

An embodiment of this application further provides a readable storage medium. The readable storage medium stores a program or an instruction, and when the program or the instruction is executed by a processor, the processes of the foregoing interface display method embodiment are implemented and a same technical effect can be achieved. To avoid repetition, details are not described herein again.

The processor is a processor in the electronic device in the foregoing embodiment. The readable storage medium includes a computer-readable storage medium, such as a computer read-only memory (read-only memory, ROM), a random access memory (random access memory, RAM), a magnetic disk, or an optical disc.

An embodiment of this application further provides a chip. The chip includes a processor and a communications interface, the communications interface is coupled to the processor, and the processor is configured to run a program or an instruction to implement the processes of the foregoing interface display method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. An interface display method, wherein the method comprises:
displaying a target window, wherein the target window comprises N payment identifiers, each payment identifier indicates one payment interface in one target application, and N is a positive integer;
receiving a secure input of a user; and
in a case that security information corresponding to the secure input matches preset security information, displaying, in response to the secure input, a payment interface indicated by a target payment identifier in the N payment identifiers.

2. The method according to claim 1, wherein the displaying a target window comprises:
displaying the target window according to target function information of M target applications, wherein
the target function information is used to indicate that a corresponding application has a payment function, the M target applications comprise payment interfaces indicated by the N payment identifiers, and M is a positive integer.

3. The method according to claim 2, wherein the target window comprises N display regions, and a payment identifier corresponding to one target application is displayed in each display region.

4. The method according to claim 3, wherein the target payment identifier is a payment identifier in a target display region in the N display regions.

5. The method according to claim 4, wherein before the receiving a secure input of a user, the method further comprises:
receiving a first input performed by the user to move a first payment identifier in the N payment identifiers to the target display region; and
in response to the first input, controlling the first payment identifier to move to the target display region, and using the first payment identifier as the target payment identifier.

6. An interface display apparatus, wherein the interface display apparatus comprises a display module and a receiving module, wherein
the display module is configured to display a target window, wherein the target window comprises N payment identifiers, each payment identifier indicates one payment interface in one target application, and N is a positive integer;
the receiving module is configured to receive a secure input of a user; and
the display module is further configured to: in a case that security information corresponding to the secure input matches preset security information, display, in response to the secure input received by the receiving module, a payment interface indicated by a target payment identifier in the N payment identifiers.

7. The interface display apparatus according to claim 6, wherein the display module is specifically configured to display the target window according to target function information of M target applications, wherein
the target function information is used to indicate that a corresponding application has a payment function, the M target applications comprise payment interfaces indicated by the N payment identifiers, and M is a positive integer.

8. The interface display apparatus according to claim 7, wherein the target window comprises N display regions, and a payment identifier corresponding to one target application is displayed in each display region.

9. The interface display apparatus according to claim 8, wherein the target payment identifier is a payment identifier in a target display region in the N display regions.

10. The interface display apparatus according to claim 9, wherein the receiving module is further configured to receive a first input performed by the user to move a first payment identifier in the N payment identifiers to the target display region; and
the interface display apparatus further comprises a moving module and a determining module, wherein
the moving module is configured to: in response to the first input received by the receiving module, control the first payment identifier to move to the target display region; and
the determining module is configured to use the first payment identifier moved by the mobile module as the target payment identifier.

11. An electronic device, comprising a processor, a memory, and a program or an instruction that is stored in the memory and executable on the processor, wherein when the program or the instruction is executed by the processor, steps of the interface display method according to any one of claims 1 to 5 are implemented.

12. A readable storage medium, wherein the readable storage medium stores a program or an instruction, and when the program or the instruction is executed by a processor, steps of the interface display method according to any one of claims 1 to 5 are implemented.

13. A chip, wherein the chip comprises a processor and a communications interface, the communications interface is coupled to the processor, and the processor is configured to run a program or an instruction to implement the steps of the interface display method according to any one of claims 1 to 5.

14. A computer program product, wherein the computer program product is stored in a non-volatile storage medium, and the computer program product is executed by at least one processor to implement steps of the interface display method according to any one of claims 1 to 5.

15. An electronic device, wherein the electronic device is configured to perform the interface display method according to any one of claims 1 to 5.
